# EUROPEAN PATENT APPLICATION

(11) **EP 1 990 652 A1**
(43) Date of publication of application: **12.11.2008**
(21) Application number: 08156034.4
(22) Date of filing: 09.05.2008
(51) Int. Cl.: G01S 7/285, G01S 13/28, G01S 13/95, G01S 13/22

(54) **Methods and systems for reducing acquisition time in airborne weather radar**

(30) Priority: 11.05.2007 US 747725
(71) Applicant: Honeywell International Inc., Morristown NJ 07960 (US)
(72) Inventor: Holmberg, Bart A., Bellevue, WA 98005 (US); Hester, Jeffrey A., Issaquah, WA 98027 (US)
(74) Representative: Buckley, Guy Julian

(57) **Abstract**

An airborne weather radar system and method. The method includes serially generating and transmitting first and second radar pulses having nonoverlapping frequency ranges, receiving reflected echoes from the transmitted radar pulses in parallel, and processing the received echoes into a usable form. In an alternative embodiment, the method also includes serially transmitting at least one additional radar pulse having an additional frequency range that does not overlap with the frequency ranges of previously transmitted radar pulses in the serial transmission. The system includes a radar processor configured to serially generate a first control signal for a first radar pulse having a first frequency range and a second control signal for a second radar pulse having a second frequency range that docs not overlap with the first frequency range. The radar processor also includes a second component configured to process received echoes in parallel into a usable form.

## Description

### BACKGROUND OF THE INVENTION

Some current aircraft weather radar systems acquire data by using a sequence of azimuth scans at offset elevation angles and placing the resulting data in a volumetric buffer (VB). The systems sample a volume of space directly in front and to the sides of the aircraft and place the associated data in the VB. Generally, once the volume has been sampled, it must be continually refreshed as the aircraft moves forward. The scanning rate and data acquisition time of current systems leaves no "extra" acquisition time to do anything but refresh the VB and interleave predictive wind shear scans.

Accordingly, there is a need for reduced acquisition time so radar system resources can be allocated to sampling and measuring "interesting" features detected within the VB such as by acquiring more data using different pulse trains for the detected buffer weather objects of interest.

### SUMMARY OF THE INVENTION

The present invention provides airborne weather radar systems and methods for improving weather radar operation.

In accordance with an aspect of the invention, the method serially generates a first radar pulse having a first frequency range and a second radar pulse having a second frequency range that does not overlap with the first frequency range. The method serially transmits the first and second radar pulses, receives reflected echoes from the transmitted radar pulses in parallel receive channels, and processes the received echoes into a usable form.

In accordance with other aspects of the invention, the method serially transmits at least one additional radar pulse having an additional frequency range that does not overlap with the frequency ranges of previously transmitted radar pulses in the serial transmission.

### BRIEF DESCRIPTION OF THE DRAWINGS

Preferred and alternative embodiments of the present invention are described in detail below with reference to the following drawings:

FIGURES 1-3 are block diagrams of a system for reducing data acquisition time for pulse compressed radar formed in accordance with an embodiment of the present invention;

FIGURE 4 is a graph showing an example of transmission frequency spectra for three channels in accordance with an embodiment of the invention;

FIGURE 5 is a diagram showing an example of transmission and reception timing for three channels in accordance with an embodiment of the invention; and

FIGURES 6 and 7 are flowcharts of an airborne weather radar method in accordance with an embodiment of the invention.

### DETAILED DESCRIPTION OF THE PREFERRED EMBODIMENT

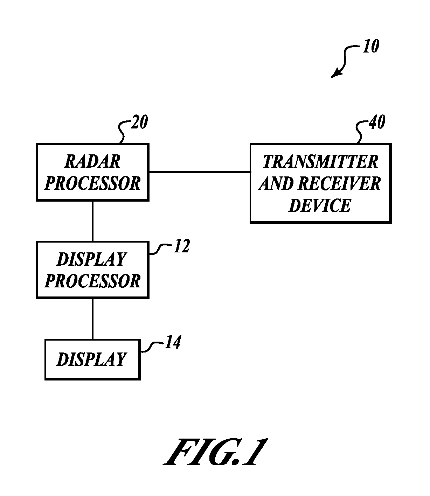

FIGURE 1 is a block diagram of a system 10 for reducing data acquisition time for pulse compressed radar formed in accordance with an embodiment of the present invention. The system 10 includes a radar processor 20 configured to serially generate a plurality (designated in this example as the variable N) of control signals for radar pulses having non-overlapping frequency ranges which are generated and transmitted by a transmitter and receiver device 40. The radar processor 20 is also in signal communication with a display processor 12. The display processor 12 generates visual images using processed signals received from the radar processor 20 and presents them on a display 14 that is in signal communication with the display processor 12. In an example embodiment, the radar pulses are pulse-compressed. Echoes corresponding to the transmitted pulses are also received by the transmitter and receiver device 40 which are then processed in parallel by the radar processor 20 into signals used to generate weather data images. The system 10 can be used to improve the performance of airborne weather radar systems such as the RDR-4000 and RDR-4000M radar systems produced by Honeywell®.

Parallel reception and processing of received echoes provides for reduced acquisition time in comparison to serially received and processed echoes. Azimuth scans typically include radials of data, with each radial typically including a sequence of pulses at various frequencies, durations, and receive times. Generally, each radial is spaced in angle by at most one half the width of a radar transmission beam. The antenna scan rate S_{θ} is defined as S_{θ} = Δθ/τᵣ where τᵣ is the radial acquisition time and Δθ is the radial spacing. So, if all else is equal, halving acquisition time doubles scan rate. With serial acquisition using one receive channel, each pulse repetition interval (PRI) must be acquired in sequence. However, with parallel acquisition, M pulses can be transmitted serially using non-overlapping frequencies while M echoes are received in parallel. The PRI can be considered as including a transmission pulse time portion (τ_{T}) and a receive time portion (τ_{Rx}). For serial reception using one channel, acquisition time is M * (τ_{T} + τ_{Rx}), but for reception using parallel channels, acquisition time is M * τ_{T} + τ_{Rx}. For τ_{T}<<τ_{Rx}, this indicates a nearly M fold potential decrease in acquisition time. Although factors exist that work against achieving a fully M fold decrease in acquisition time, parallel reception still provides for a significant decrease in acquisition time over previous serial systems.

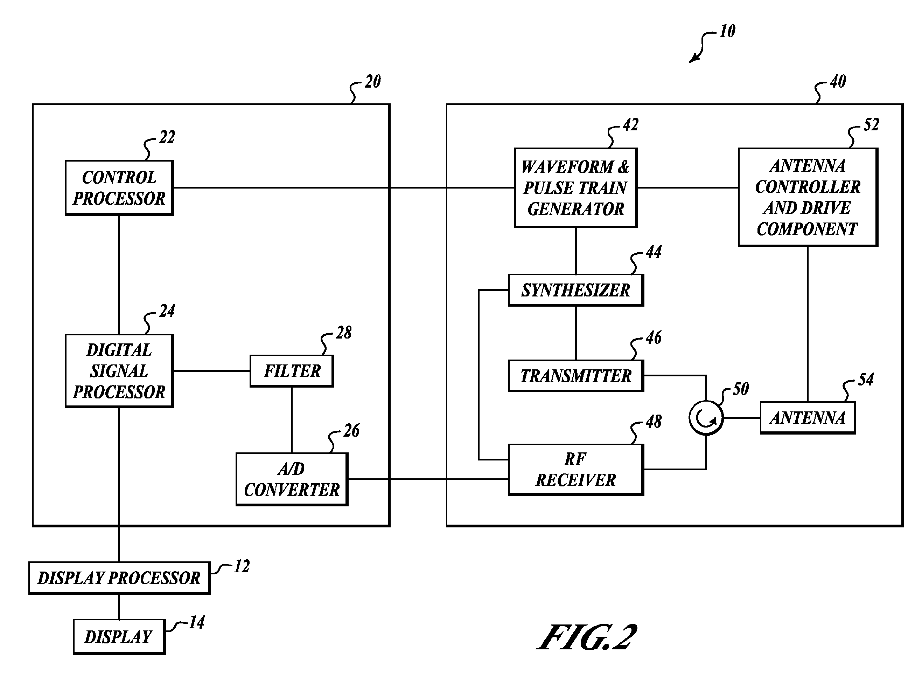

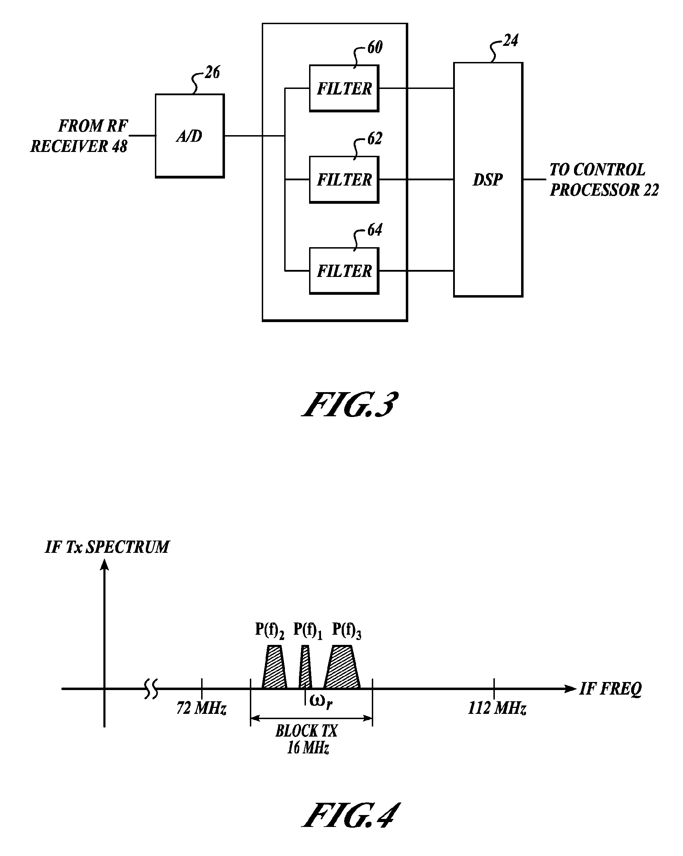

FIGURE 2 is a block diagram showing additional detail for the system 10 of FIGURE 1 for an example embodiment of the invention. The radar processor 20 includes a control processor 22 in data communication with a Digital Signal Processor (DSP) 24 in data communication with a filter 28 linked to an analog to digital (A/D) converter 26. Although a single link is shown between the DSP 24 and the filter 28, multiple signal paths may be present between the DSP 24 and the filter 28. In an example embodiment, the filter 28 is implemented using a field programmable gate array (FPGA). The filter 28 performs parallel filtering and is further shown in FIGURE 3. The display processor 12 is shown linked to the DSP 24, but is in signal communication with other components, such as the control processor 22 in other embodiments. In some embodiments, the display processor 12 is integrated with one or more components of the radar processor 20 such as the control processor 22 or the DSP 24 rather than being a separate component.

The transmitter and receiver device 40 includes a waveform and pulse train generator 42 in data communication with a synthesizer 44 linked to a transmitter 46 which is connected to an antenna 54 via a switch device 50 that controls whether a receiver 48 or the transmitter 46 is currently connected to the antenna 54. The synthesizer 44 is also linked to the receiver 48. The receiver 48 uses phase and timing information from the synthesizer 44 to modulate received radar data. The transmitter and receiver device 40 also includes an antenna controller and drive component 52 which is connected to the waveform and pulse train generator 42 as well as the antenna 54. The control processor 22 is in data communication with the waveform and pulse train generator 42, and directs the transmitter and receiver device 40 via this linkage. The receiver 48 sends the received echoes to the A/D converter 26. For example, the received echoes could enter the receiver 48 at 9.3 GHz analog and the receiver 48 would shift them in frequency to 48 MHz analog before sending them to the A/D converter 26.

FIGURE 3 is a block diagram showing additional detail for the filter 28 shown in FIGURE 2. In the example shown, the filter 28 includes a first filter 60, a second filter 62, and a third filter 64. Each of the filters 60, 62, 64 are configured to filter a predetermined frequency range that corresponds to the expected frequencies for echo signals received from each of three transmitted radar pulses. In the example shown, three filters are present, which would allow the system 10 to filter echo signals for up to three serially transmitted radar pulses in parallel. However, other embodiments use differing numbers of filters within the filter 28. Each of the filters 60, 62, 64 accepts the output of the A/D converter 26 as an input. Each of the filters 60, 62, 64 outputs to the DSP 24. An output of the DSP 24 is used as an input to the display processor 12 (see FIGURE 2) that generates and displays images on the display 14 based on the filtered signals. In other embodiments, the display processor 12 is driven by the control processor 22.

Although particular configurations are shown for the examples shown in FIGURES 1-3, different hardware configurations are used in other embodiments, with the commonality being that each system is configured to transmit radar pulses having non-overlapping frequencies serially and receive and process echoes from the transmitted pulses in a plurality of parallel receive channels.

FIGURE 4 is a graph showing an example of transmission frequency spectra for three channels in accordance with an embodiment of the invention. The graph shows intermediate frequency (IF) transmission (Tx) spectrum vs. IF frequency (FREQ) for the three channels. The transmission spectra are generating using a transmission path in a radar system, such as the transmission path that includes the control processor 22, the waveform and pulse train generator 42, the synthesizer 44, the transmitter 46, the switch device 50, and the antenna 54 as shown in FIGURE 2. In the example shown, a transmission (TX) block of 16 MHz is allocated for transmission of the three channels. The spectrum for each of the three channels is designated as P(f)₁, P(f)₂, and P(f)₃ respectively. As can be seen in the diagram, the channels do not overlap in frequency. Although a 16 MHz block is allocated in this example, other embodiments have differing levels of bandwidth allocated to transmission. Also, greater or lesser numbers of channels are used in other embodiments.

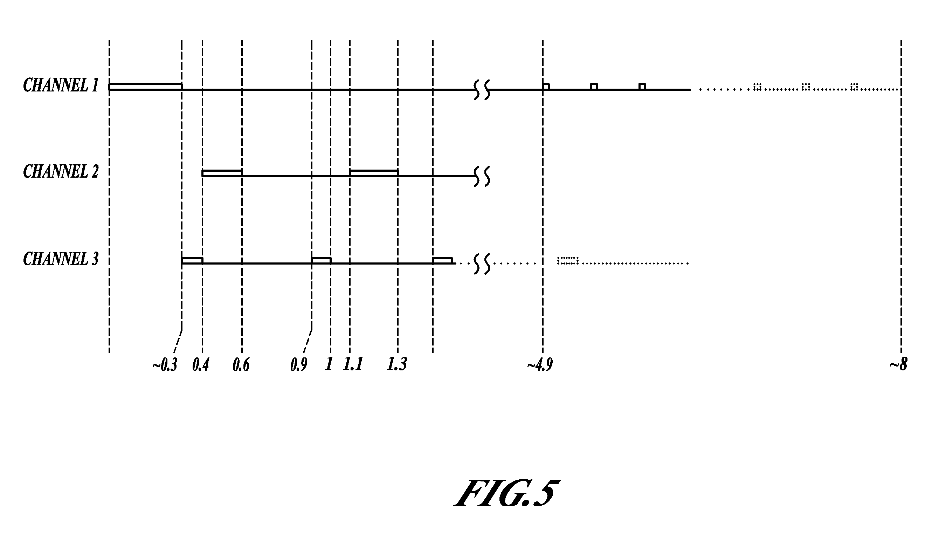

FIGURE 5 is a diagram showing an example of transmission and reception timing for three channels in accordance with an embodiment of the invention. For the example embodiment shown, one transmitter with three receiving channels is used and all receiving channels are assumed to have no valid data during transmission. Transmission pulses are shown for channels 1-3. In this example, each of the channels has a different pulse repetition interval (PRI). Channel 1 has a much longer PRI than channel 2 or 3 during the period from 0 to 4.9 milliseconds (ms), and the system 10 transmits on channels 2 and 3 numerous times during each PRI of channel 1 in the period from 0 to 4.9 ms to achieve the maximum channel usage. Since each channel cannot receive data during transmission of any of the channels in this example, there are additional time gaps in the receive data on all channels, especially channel 1. The transmit-to-receive ratio for all channels (transmit duty cycle) is typically small and in the range from approximately 10 - 15 percent (but is outside this range in other embodiments), and therefore the gaps are small and are filled in with cross range filtering of successive data sets on the same channel. A variable amount of time jitter is used between transmission pulses on each channel to ensure that the gaps do not fall in the same receive time window and are filled by previous or successive receive data in an example embodiment.

As shown in FIGURE 5, channel 1 is transmitting between approximately 0 and 0.3 ms, channel 3 is transmitting between approximately 0.3 and 0.4 ms, and channel 2 is transmitting between approximately 0.4 and 0.6 ms. After the initial pulse between 0 and 0.3 ms, channel 1 does not transmit again until it begins transmitting a second pulse train using shorter pulse times beginning at approximately 4.9 ms. Channels 2 and 3 on the other hand, continue to periodically transmit pulses in the time between the end of their initial pulse and 4.9 ms. Channel 2 transmits a second pulse between approximately 1.1 ms and 1.3 ms and continues to periodically transmit pulses of approximately 0.2 ms duration. Channel 3 transmits a second pulse between approximately 0.9 ms and 1 ms and continues to periodically transmit pulses of approximately 0.1 ms duration. Although only channel 1 is reallocated to change from a long pulse length to a shorter pulse length in this example, channels 2 or 3 also may be reallocated to send pulses of varying lengths. In an example embodiment, pulses are periodically transmitted for each channel, but with starting times for each pulse that are changed slightly (jittered) between each pulse. This time jitter value is a random time value with a predetermined upper and lower bound for the amount of jitter used.

Although each channel uses a different PRI in FIGURE 5, in other embodiments, one or more of the parallel receive channels have the same PRI. In an additional example, a multi-channel PRI is used where a transmission pulse is serially sent for each channel and no transmissions occur during a common receive time, at the end of which transmission pulses are serially sent for each channel again. The multi-channel PRI includes the transmission times of each channel as well as the common receive time. In some embodiments, time jitter is not used, such as in some embodiments that use a multi-channel PRI, because in that case additional time gaps caused by transmission of one channel during a receive time of another channel having a different PRI are not present.

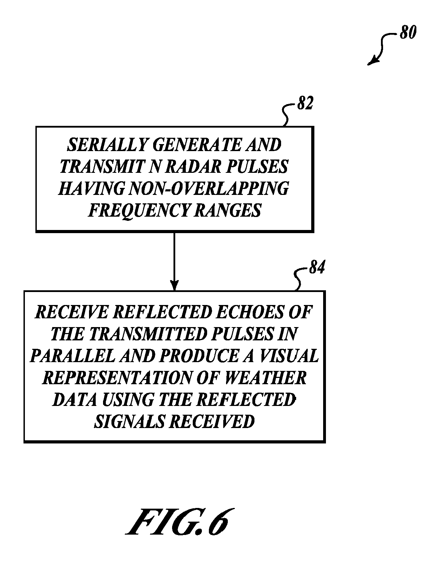

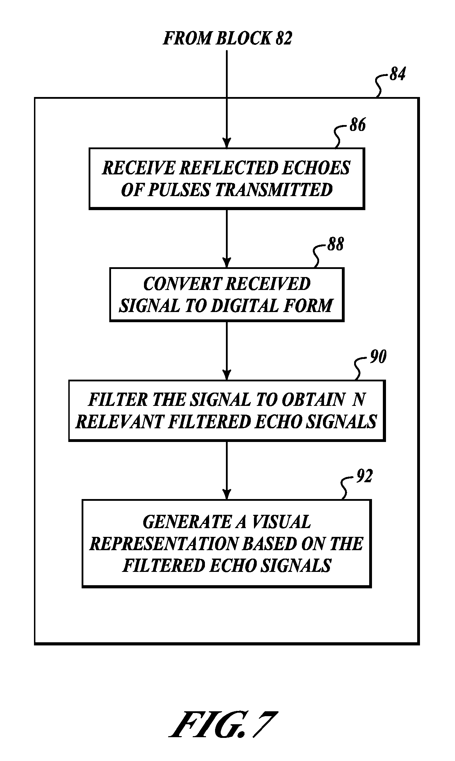

FIGURE 6 is a flowchart of an airborne weather radar method 80 in accordance with an embodiment of the invention. The method 80 begins at a block 82, where N consecutive pulses having non-overlapping frequency ranges are serially generated and transmitted, where N represents the number of pulses and is greater than one. In an example embodiment, N is two. However, in other embodiments, N is three or more. Next, at a block 84, reflected echoes of the transmitted pulses are received in parallel by the transmitter and receiver device 40 and a visual representation of weather data is produced by the radar processor 20 using the reflected signals received (see FIGURE 7). Although not shown, these steps are repeated in a continuous manner.

FIGURE 7 is a flowchart showing additional detail for the block 84 shown in FIGURE 6. First, at a block 86, the reflected echoes of the transmitted pulses are received by the receiver 48. The reflected echoes are received using the receiver 48 which is connected to the antenna 54 via the device 50 during reception of the reflected echoes. Next, at a block 88, the received signal is converted to digital form by the A/D converter 26. Then, at a block 90, the digital signal is filtered to obtain N relevant echo signals where N corresponds to the number of radar pulses transmitted at the block 82. This is followed by a block 92 a visual representation is generated based on the filtered echo signals. The filter 28 performs the filtering described in the block 90. In one embodiment, the DSP 24 processes the filtered echo signals to generate a processed signal before the processed signal is used by the display processor 12 to generate a visual image on the display 14 at the block 92. These four more detailed blocks will not necessarily be conducted in the order shown. Some of the blocks may happen in parallel or in orders other than those shown.

The filter 28 and the DSP 24 may be included in a single component in some embodiments.
The embodiments of the invention in which an exclusive property or privilege is claimed are defined as follows:

## Claims

1. An airborne weather radar method comprising:
serially generating a first radar pulse having a first frequency range and a second radar pulse having a second frequency range that does not overlap with the first frequency range;
serially transmitting the first and second radar pulses;
receiving reflected echoes from the transmitted radar pulses in parallel receive channels; and
processing the received echoes into a usable form,
wherein receiving reflected echoes comprises:
receiving a combined analog echo signal;
converting the combined analog echo signal to a combined digital echo signal; and
filtering the combined digital signal into a first echo signal corresponding to echoes received from the first radar pulse and a second echo signal corresponding to echoes received from the second radar pulse,
wherein processing comprises producing a visual representation of weather data.

2. The method of Claim 1, further comprising serially transmitting at least one additional radar pulse having an additional frequency range that does not overlap with the frequency ranges of previously transmitted radar pulses in the serial transmission.

3. The method of Claim 1, wherein the first and second radar pulses are pulse-compressed radar pulses.

4. The method of Claim 1, wherein serially transmitting the first and second radar pulses and receiving reflected echoes from the transmitted radar pulses is repetitively performed using a multi-channel pulse repetition interval.

5. The method of Claim 1, wherein the first and second radar pulses have different pulse repetition intervals, wherein a time interval between transmission of at least one of the first radar pulse and the second radar pulse is varied between repetitions and wherein variation of the time interval is a random time jitter having a predefined lower bound and a predefined upper bound.

6. A weather radar system for use on an aircraft, the system comprising:
a radar processor comprising:
a first component configured to serially generate a first control signal for a first radar pulse having a first frequency range and a second control signal for a second radar pulse having a second frequency range that does not overlap with the first frequency range; and
a second component configured to process received echoes in parallel into a usable form;
a synthesizer device for generating pulses based on the control signals;
a transmitter for transmitting the generated pulses; and
a receiver for receiving reflected echoes of the transmitted pulses,
wherein the second component comprises:
an analog to digital converter for receiving a combined analog echo signal and converting the combined analog echo signal to a combined digital echo signal; and
a filtering component for filtering the combined digital signal into a first echo signal corresponding to echoes received from the first radar pulse and a second echo signal corresponding to echoes received from the second radar pulse..

7. The system of Claim 6, wherein the first component is configured to generate at least one additional control signal for at least one additional radar pulse having an additional frequency range that does not overlap with the frequency ranges for radar pulses corresponding to previously generated control signals.

8. The system of Claim 6, wherein the first and second control signals are for first and second pulse-compressed radar pulses respectively, wherein the first component is configured to generate the first and second control signals repetitively using a multi-channel pulse repetition interval or using first and second control signals that have different pulse repetition intervals.

9. The system of Claim 8, wherein the first component is configured to vary a time interval between generation of at least one of the first and second control signals between repetitions, wherein variation of the time interval is a random time jitter having a predefined lower bound and a predefined upper bound.

10. The system of Claim 6, wherein the second component is configured to process the received echoes into a visual representation of weather data.
